# EUROPÄISCHE PATENTSCHRIFT

(11) **EP 2 673 566 B1**
(45) Veröffentlichungstag und Bekanntmachung des Hinweises auf die Patenterteilung: **27.09.2017**
(21) Anmeldenummer: 12703105.2
(22) Anmeldetag: 08.02.2012
(51) Int. Cl.: F24D 3/14, F24F 5/00

(54) **VERLEGESYSTEM FÜR FLÄCHENHEIZUNGEN / -KÜHLUNGEN**
INSTALLATION SYSTEM FOR SURFACE HEATERS/COOLERS
SYSTÈME DE POSE POUR DES SYSTÈMES DE CHAUFFAGE/REFROIDISSEMENT SURFACIQUES

(30) Priorität: 11.02.2011 DE 202011002652 U
(43) Veröffentlichungstag der Anmeldung: 18.12.2013
(73) Patentinhaber: Kermi GmbH, 94447 Plattling (DE)
(72) Erfinder: HALSER, Heinrich, 94469 Deggendorf-Natternberg (DE); SAXINGER, Robert, 94447 Plattling (DE); HABERMANN, Arno, 94036 Passau (DE); GÖTZ, Thomas, 94526 Metten (DE); MÜHLBAUER, Karl, 94560 Offenberg (DE)
(74) Vertreter: Patentanwälte Bressel und Partner mbB
(86) Internationale Anmeldenummer: PCT/EP2012/052084
(87) Internationale Veröffentlichungsnummer: WO 2012/107462

(56) Entgegenhaltungen:
- EP-A1- 1 526 292
- EP-A2- 0 059 252
- DE-A1- 3 014 916
- DE-A1- 3 030 933
- DE-U1- 7 902 377
- DE-U1- 8 405 151
- DE-U1-202004 011 405

## Beschreibung

Die vorliegende Erfindung betrifft ein Verlegesystem für Flächenheizungen/ -kühlungen, insbesondere für Fußbodenheizungen nach dem Oberbegriff des Anspruchs 1.

Aus dem Stand der Technik sind derartige Systeme insbesondere zur Verlegung von Flächenheizungen bekannt.

In der DE 3105816 C2 wird eine Flächenheizung, insbesondere Fußbodenheizung beschrieben, bei der die Heizungsrohre auf vorzugsweise mit einer Folie abgedeckten Dämmstoffplatte durch Halter aus Draht fixiert sind, die die Rohre mindestens an einer von der Dämmstoffplatte abgewandten Mantellinie mit einem Berührungsteil festlegen und mit einem gebogenen Teil in die Dämmstoffplatte eindringen. Der Halter schwenkt um die Rohrachse des zu befestigenden Rohres. Der in die Dämmstoffplatte eingedrungene Bogen der Haltenadel lässt sich ohne weitere Schäden an der Dämmstoffplatte wieder ausschwenken.

In der DE 78 15 984 U1 wird ebenfalls eine Flächenheizung beschrieben, bei der die Heizrohre auf einer mit einer Isolierschicht bedeckten Dämmstoffplatte befestigt werden. Als Befestigungsmittel werden so genannte Krampen verwendet, deren Schenkelenden um mindestens 90° abgebogen sind. Die Krampen beschädigen schon beim Einbringen die unter der Isolierschicht befindliche Dämmstoffplatte erheblich, indem die rechtwinklig angeordneten Schenkelenden einen in Folge des Aufschwenkens auf das Rohr erforderlichen Kreisbogen beschreiben und damit entlang dieses Kreisbogens die Dämmstruktur zerstören. Auch dieses Befestigungsmittel lässt sich durch eine dem Einbringvorgang gegenläufige Bewegung ohne weitere als die ohnehin schon an der Dämmstoffplatte verursachten Schäden wieder entfernen.

In der EP 0059 252 A2 wird ein Verfahren und eine Vorrichtung zur Befestigung von insbesondere für eine Fußflächenheizung bestimmten Rohren auf einer Isolierschicht beschrieben. Zur Fixierung der Rohre werden dabei herkömmliche u-förmige Rohrhalter verwendet, wobei die Rohre auf einer herkömmlichen mit einer Isolierschicht bedeckten Dämmstoffplatte befestigt werden.

Die vorliegende Erfindung soll die bekannten Systeme insbesondere bezüglich der Haltekräfte verbessern.

Erfindungsgemäß wird diese Aufgabe durch ein Verlegesystem für Flächenheizungen/ - kühlungen gemäß den Merkmalen des Anspruchs 1 gelöst. Vorteilhafte Ausbildungen der Erfindung sind in den zugehörigen Ansprüchen enthalten.
Das erfindungsgemäße Verlegesystem umfasst dabei mindestens eine Verlegeplatte, Rohrhalter, sowie ein Setzwerkzeug für das Einbringen der Rohrhalter, wobei die

Verlegeplatte mehrere Schichten aufweist und die Rohrhalter aus Draht mit seitlich abgebogenen Enden bestehen, die in die Verlegeplatte durch Einsatz des Setzgerätes eindringen. Erfindungsgemäß ist vorgesehen, dass
- die Verlegeplatte als Strukturkammerplatte, bestehend aus drei fest miteinander verbundenen Funktionsschichten, ausgebildet ist, wobei die mittlere Schicht eine Stützstruktur aufweist, die die stabilen oberen und unteren Deckschichten dauerhaft voneinander beabstandet und zur Aufnahme der Schwenkbögen der Rohrhalter ausgebildet ist;
- die seitlich abgebogenen Enden der Rohrhalter einen Krümmungsradius r aufweisen, der gleich oder kleiner der Höhe der oberen Deckschicht und der mittleren Schicht der Verlegeplatte zuzüglich der Aufbauhöhe des Gegenhalters des Setzwerkzeuges ist;
- das Setzwerkzeug zur Aufnahme der Rohrhalter mit seitlich abgebogenen Enden mit Schwenkbögen und zum Einbringen derselben in die Verlegeplatte ausgebildet ist.

Die Haltekräfte werden dabei insbesondere durch eine vorteilhafte Ausbildung der Verlegeplatte sowie der darauf abgestimmten verwendeten Befestigungsmittel (Rohrhalter, Plattenverbinder) verbessert. Vorteilhaft zeichnet sich der Einbringvorgang bei den erfindungsgemäß ausgebildeten Befestigungsmitteln dadurch aus, dass die in einem Kreisbogen, dessen Radius zur maximal zulässigen Eindringtiefe passt, ausgeführten Schenkelenden durch einen Schwenkbiegevorgang am Befestigungsmittel selbst in die Verlegeplatte eingebracht werden. Dabei wird die Form der Befestigungsmittel ähnlich wie beim Klammern von Papierbögen verändert und ein rückwärtiges Wieder-HerausSchwenken, wie bei den aus dem Stand der Technik bekannten Krampen, ist unmöglich.

Ausgehend von der Dicke der Verlegeplatte ist nur ein kleiner Bereich des Schwenkradius zulässig, wenn zur Vermeidung von Beschädigungen an der darunter befindlichen Dichtlage (meist eine Folie) die untere Plattenebene der Verlegeplatte auf keinen Fall durchstoßen werden darf. Bei erster Betrachtung darf der Schwenkradius maximal der Plattendicke plus der Dicke des zwischen Rohrhalter und Platte beim Schwenkbiegen erforderlichen Gegenhalters entsprechen, ansonsten wird die untere Plattenebene berührt.

Sinnvoll ist es dann, wenn der Krümmungsradius der Enden der Rohrhalter etwa diesem Schwenkradius entspricht. Damit erreicht man, dass die Enden der Rohrhalter wie eine Nadel in der Platte nur einen Einstich verursachen und durch diesen Einstich verschwenkt werden, was zu den größten erreichbaren Haltekräften der Rohrhalter führt.

Stimmen der Radius der Enden der Rohrhalter und der Schwenkradius nicht überein, gibt es zwei Möglichkeiten. Ist der Radius der Enden der Rohrhalter größer als der Schwenkradius, reißen die Rohrhalter beim Schwenkbiegen nach dem Durchstechen der oberen Plattenebene einen mehr oder minder langen Schlitz; dieser fällt am ungünstigsten aus, wenn die Enden der Rohrhalter einen unendlich großen Radius haben, also eine gerade Form aufweisen; je länger dieser Schlitz ausfällt, umso geringer ist die Haltekraft der Rohrhalter in der Platte, da nur ein Teil der Länge der seitlichen Bögen hinter Plattenmaterial hält, der andere Teil liegt im Schlitz und hält nichts.

Ist der Radius der Enden der Rohrhalter kleiner als der Schwenkradius, besteht die Gefahr, dass die Rohrhalter aufgrund des ungünstig kleinen Auftreffwinkels von der harten Plattenoberfläche abgelenkt werden und gar nicht in die Platte eindringen.

Vorteilhaft ist die untere Deckschicht mit einer festen und glatten Oberfläche in Richtung der mittleren Schicht versehen, welche geeignet ist die Enden der Rohrhalter seitlich abzulenken, um einerseits die Rückhaltekräfte der Rohrhalter oder Plattenverbinder mittels Formschluss gegen Auszug zu erhöhen und andererseits das Durchdringen der unteren Schicht beim Setzvorgang der Rohrhalter oder Plattenverbinders zu verhindern.

Nach einer weiteren Variante der Erfindung ist vorgesehen, dass die obere Schicht der Verlegeplatte aus einer Folienbahn, einer Gittergewebefolie oder einem Metallgewebe (Streckmetall) besteht; die mittlere Schicht aus einer Stützstruktur aus einer Kunststofffolie, einer druckfesten Schaumstoffschicht oder einem Strukturklebstoff besteht, der einerseits die geforderten Druck- und Zugkräfte sicherstellt und andererseits das Eindringen der Rohrhalter erlaubt; und die untere Schicht aus einer Folienbahn oder einer Holz- bzw. Hartfaserplatte besteht.

Zum Umfang der Erfindung gehört auch ein Setzwerkzeug, welches ein System zur Speicherung von Energie, eingebracht in Form der über den Handgriff auf das Betätigungselement wirkenden Arbeit aus Betätigungskraft und Betätigungsweg, wobei das Betätigungselement mit einem im Gehäuse oberhalb des Schiebers integrierten Rückhaltesystem in einem funktionalen Zusammenhang steht. Weiterhin ist eine über das Rückhaltesystem auf das Betätigungselement und den damit verbundenen Schieber wirkende Rückhaltekraft einstellbar, wobei der Schieber bei Überwindung der Rückhaltekraft aktivierbar ist, wodurch ein annähernd gleicher Impuls erreichbar ist, der unabhängig vom Bediener ist.

Alternativ dazu kann das Rückhaltesystem mit einem Weg gesteuerten Auslösemechanismus ausgestaltet sein, der den Schieber bei einer definierten und beispielsweise in Abhängigkeit von der Festigkeit der Rohrhalter einstellbaren Position des Betätigungselementes freigibt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden.

Es zeigen
- Fig. 1: eine Variante des erfindungsgemäßen Systems in einer perspektivischen Darstellung,
- Fig. 2: eine Variante des erfindungsgemäßen Systems gemäß Fig. 1 in Schnittdarstellung,
- Fig. 3: eine Variante des erfindungsgemäßen Systems gemäß Fig. 1 in einer Schnittdarstellung in Setzposition,
- Fig. 4: eine Darstellung der Geometrie der Rohrhalter,
- Fig. 5: eine Darstellung der Geometrie der Plattenverbinder,
- Fig. 6: die Verbindung zweier Verlegeplatten mittels Plattenverbinder.

Das Verlegesystem 1 für Rohre 50 einer Flächenheizungen umfasst mindestens eine Verlegeplatte 10, Rohrhalter 20, Plattenverbinder 30 sowie ein Setzwerkzeug 40 für das Einbringen der Rohrhalter 20 und Plattenverbinder 30, wobei die Verlegeplatte10 mehrere Schichten aufweist und die Rohrhalter und Plattenverbinder aus Draht mit seitlich abgebogenen Enden bestehen, die in die Verlegeplatte 10 durch Einsatz des Setzgerätes eindringen.

Die Verlegeplatte 10 ist nach einer Variante der Erfindung als Strukturkammerpfatte ausgebildet und besteht aus drei fest miteinander verbundenen Funktionsschichten, wobei die mittlere Schicht 12 eine Stützstruktur aufweist, die die stabilen Deckschichten 11 und 13 dauerhaft voneinander beabstandet und zur Aufnahme der Schwenkbögen a, b der Rohrhalter 20 und Plattenverbinder 30 ausgebildet ist.

Die Schicht 11 stellt die Haltekräfte der Rohrhalter und Plattenverbinder sicher und weist zudem ausreichend Festigkeit für die Baustellen üblichen Belastungen durch Begehen, Aufstellen von Leitern und ähnlichen sowie ein aufgedrucktes Raster für die Rohrverlegung auf.

Die Schicht 12 bietet den erforderlichen Freiraum für die Rohrhalter und Plattenverbinder, ist aber auch stabil genug um einerseits Belastungen auf der Baustelle und für die spätere Raumnutzung eine hohe Flächenlast beim Zusammendrücken zwischen den Schichten 11 und 13 dauerhaft sicher zustellen und andererseits die Schichten 11 und 13 so miteinander zu fixieren, dass ausreichend Festigkeit für Abzugskräfte durch Rohrdrall und allgemeine Baustellenbelastungen vorhanden ist. Zudem kann die Stabilität des Materials oder der Geometrie der Schicht 12 dazu dienen, zusätzliche Haltekräfte für die Rohrhalter 20 zu bieten.

Die Schicht 13 fungiert als Trennlage zur darunter befindlichen Dichtfolie und der bauseits eingebrachten Dämmschicht, wobei die Widerstandsfähigkeit der Schicht 13 maßgeblich dazu beiträgt, die darunter liegende Dichtebene, meist in Form einer Folie ausgeführt, vor Verletzungen durch die unteren Enden der Rohrhalter 20 zu schützen. In einer besonderen Ausführung ist diese Schicht mit einer festen und glatten Oberfläche in Richtung der Schicht 12 versehen, die dazu dient, speziell vorgeformte Enden der Rohrhalter 20 beim versuchten Eindringen seitlich abzulenken, um einerseits die Rückhaltekräfte der Rohrhalter mittels Formschluss gegen Auszug zu erhöhen und andererseits das Durchdringen der Schicht 13 beim Setzvorgang der Rohrhalter 20 zu verhindern.

Die Verlegeplatte 10 zeichnet sich trotz der geringen Höhe durch einen niedrigen Wärmeleitwert aus, um einerseits die bauseits zu verlegende Dämmdicke so gering als möglich zu halten und andererseits bei direkter Verlegung auf der tragenden Unterkonstruktion im Sinne eines flinkeren Regelverhaltens die Heiz/Kühlebene von der Unterkonstruktion thermisch zu entkoppeln.

Die Schicht 11 kann aus einer Folienbahn, einer Gittergewebefolie oder einem Metallgewebe (Streckmetall) bestehen.

Die Schicht 12 besteht entweder aus einer Stützstruktur wie beispielsweise einer Noppenbahn aus einer Kunststofffolie, einer druckfesten Schaumstoffschicht oder einem Strukturklebstoff, der einerseits die geforderten Druck- und Zugkräfte sicherstellt und andererseits das Eindringen der Rohrhalter erlaubt.

Die Schicht 13 besteht entweder aus einer Folienbahn oder einer Holz- bzw. Hartfaserplatte oder einem anderen ausreichend festen Werkstoff. Bevorzugte Ausführungen stellen Kombinationen aus einer Folie-Stützstruktur-Folie bzw. Gittergewebefolie-Schaumstoffschicht-Hartfaserplatte dar. Für das Verbinden der Platten untereinander sind sowohl ein stumpfer Verbund als auch ein überlappender Verbund mit Versatz der Schicht 11 zu den Schichten 12 und 13 möglich.

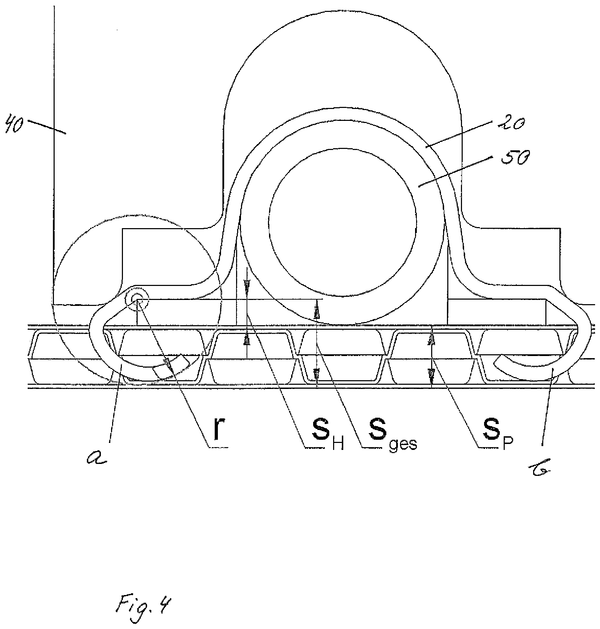

Die seitlich abgebogenen Enden a, b der Rohrhalter 20 und Plattenverbinder 30 weisen einen Krümmungsradius r auf, der gleich oder kleiner der Höhe der Schichten 11 und 12 der Verlegeplatte 10 zuzüglich der Aufbauhöhe des Gegenhalters des Setzwerkzeuges 40 ist. Die Geometrie der Rohrhalter 20 wird in der Fig. 4 verdeutlicht. Die Dicke S mit dem Index "P" stellt die Plattendicke der Verlegeplafte dar. Die Dicke S mit dem Index "H" stellt die wirksame Aufbauhöhe des Gegenhalters des Setzgerätes dar. Die Dicke S mit dem Index "ges" stellt die Gesamtdicke dar, sie setzt sich zusammen aus der Plattendicke der Verlegeplatte 10 und der Aufbauhöhe des Gegenhalters des Setzgerätes.

Für die störungsfreie Funktion ist der äußere Klammerradius r maßgebend. Somit muss der Radius r gleich oder kleiner als die Gesamtdicke "Sges" abzüglich der Materialstärke der unteren Schicht 3 der Verlegeplatte 10 sein, um ein Durchstoßen zu vermeiden.

Die Rohrhalter 20 gemäß der Fig. 4 bestehen vorzugsweise aus Metall oder einer Metall-Kunststoffkombination und weisen bei geringem Materialeinsatz eine hohe Festigkeit auf um einerseits die Schicht 11 der Verlegeplatte 10 leicht zu durchdringen, sind aber andererseits leicht genug umformbar, um in der Schicht 12 so umgebogen zu werden, dass ein Formschluss mit Schicht 11 entsteht und die eindringenden Spitzen der Enden der Rohrhalter bei Bedarf von der zur Schicht 12 weisenden Oberfläche der Schicht 13 abgelenkt werden. Eine Abschrägung und/oder spitze Form der Enden der Rohrhalter erleichtert das Eindringen in die Schicht 11 und das Ablenken an der Oberfläche der Schicht 13. Die Festigkeit der Rohrhalter ist so bemessen, dass ein Aufbiegen der seitlich abgebogenen Enden a, b durch die vom Rohr bei der Verlegung auf den Rohrhalter ausgeübten Kräfte sowie durch äußere Einwirkung bis zur Estricheinbringung und Erstarrung auftretenden Belastungen zuverlässig verhindert wird.

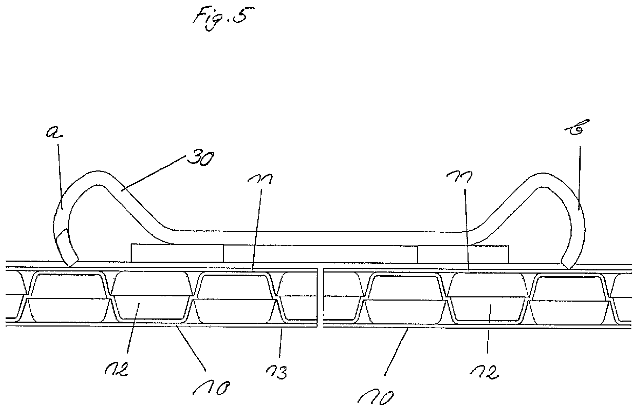

Die Plattenverbinder 30 gemäß der Fig. 5 bestehen wie die Rohrhalter 20 vorzugsweise aus Metall oder einer Metall-Kunststoff-Kombination und weisen bei geringem Materialeinsatz eine hohe Festigkeit auf, um einerseits die Schicht 11 der Verlegeplatte 10 zu durchdringen, sind aber andererseits leicht umformbar um in der Schicht 12 so umgebogen zu werden, dass ein Formschluss mit der Schicht 11 entsteht und die eindringenden Spitzen der Plattenverbinder bei Bedarf von der Schicht weisenden Oberfläche der Schicht 13 abgelenkt werden.
Eine Abschrägung und/oder spitze Form der Enden der Rohrhalter/Plattenverbinder erleichtert das Eindringen in die Schicht 11 und das Ablenken an der Oberfläche der Schicht 13. Damit werden auch die Nachteile bisher bekannter Plattenverbunde durch herkömmliches Klebeband (ungünstig bei Staub auf der Klebefläche) oder alternative Verknüpfungselemente in Form von Noppen oder Kunststoffelementen (an bestimmte Positionierung der Platten zueinander gebunden) überwunden.

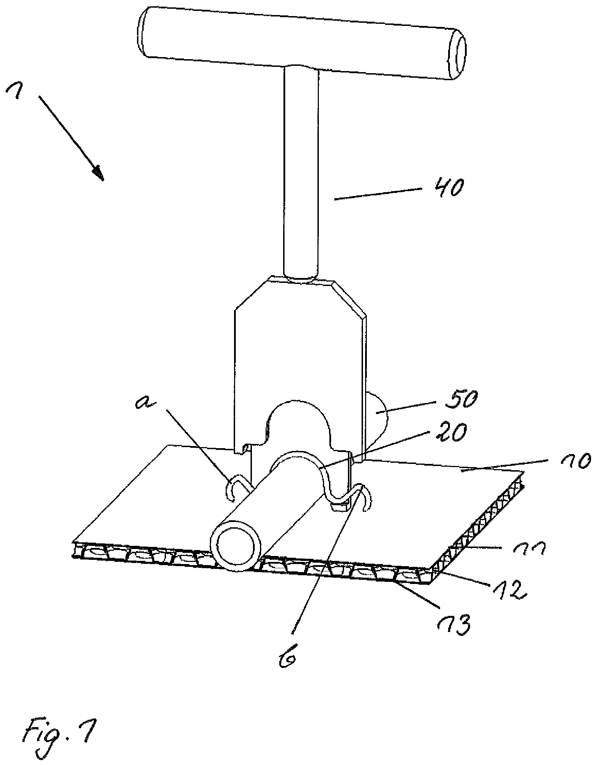

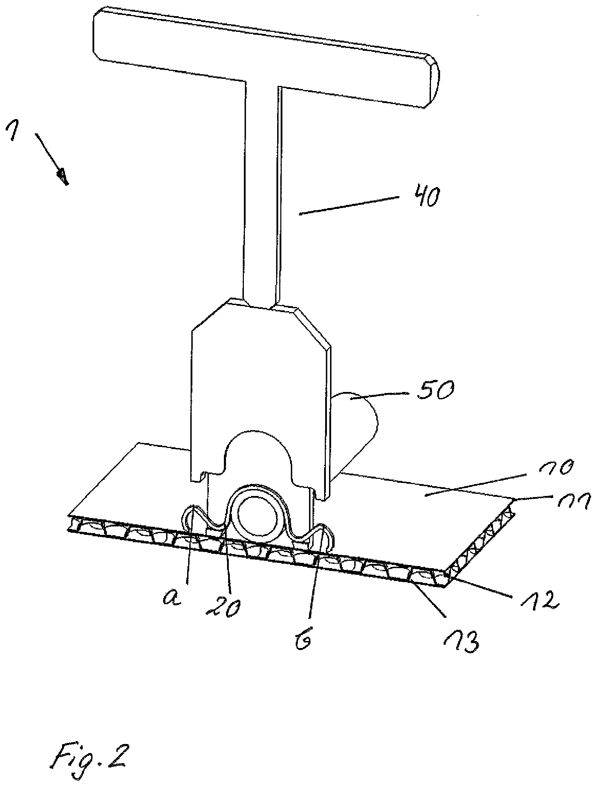

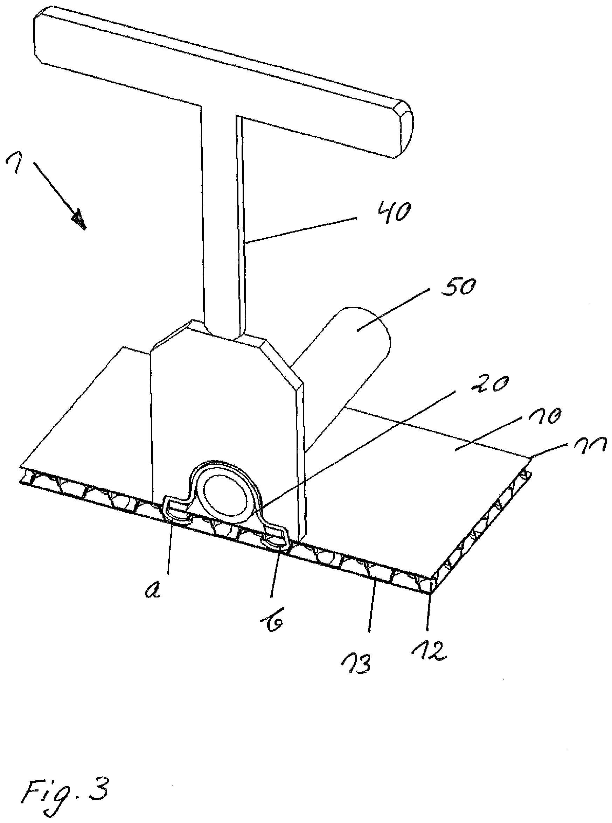

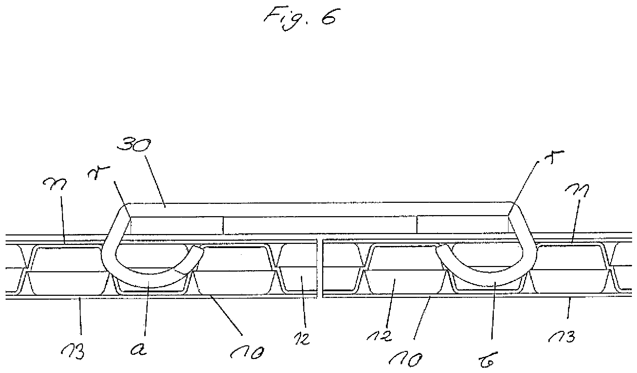

Der Plattenverbund (Fig. 6) ist an beliebiger Stelle und bei Bedarf auch beliebig oft herstellbar. Das Setzwerkzeug 40 ist zur Aufnahme der Rohrhalter 20 und/oder Plattenverbinder 30 mit seitlich abgebogenen Enden mit Schwenkbögen a, b und zum Einbringen derselben in die Verlegeplatte 10 ausgebildet. Das Setzwerkzeug 40 ist in den Fig. 1 bis 3 nur stark vereinfacht dargestellt. Es besteht im Wesentlichen aus einem Fußstück, gekennzeichnet durch eine Hohlkontur, die das Fixieren am Rohr sichert und eine Kammer, in der ein Rohrhalter für den Setzvorgang bereitgehalten wird, einem Rohrhaltermagazin zur Aufnahme der Rohrhalter und einem Betätigungselement, bei dessen Betätigung der in der Kammer des Fußstücks befindliche Rohrhalter nach unten bis zu einem Gegenhalter bewegt wird, um in die Schicht 11 der Verlegeplatte 10 einzudringen und innerhalb der Schicht 12 einen Formschluss zur sicheren Halterung des Rohres zu bilden.

Vorteilhaft ist das Setzgerät 40 entweder durch die gleiche Bauart der Rohrhalter und Plattenverbinder für das Setzen der Rohrhalter und der Plattenverbinder gleichermaßen geeignet, alternativ erfolgt die Anpassung durch einfachen Wechsel des Magazins.

Das Setzwerkzeug 40 verfügt über ein System zur Speicherung der über den Handgriff auf das Betätigungselement eingebrachten Arbeit, welches mit einem im Gehäuse oberhalb des Schiebers integrierten Rückhaltesystem in einem funktionellen Zusammenhang steht, wobei über das Rückhaltesystem eine auf das Betätigungselement und den damit verbundenen Schieber wirkende Rückhaltekraft einstellbar ist und der Schieber bei Überwindung der Rückhaltekraft aktivierbar ist wodurch ein annähernd gleicher Impuls erreichbar ist (beispielsweise durch einen Federspeicher, einen Hilfsantrieb oder dergleichen), der unabhängig vom Bediener und der Betätigungsgeschwindigkeit ist.

## Patentansprüche

1. Verlegesystem für Flächenheizungen/-kühlungen, umfassend mindestens eine Verlegeplatte (10), Rohrhalter (20) sowie ein Setzwerkzeug (40) für das Einbringen der Rohrhalter (20), wobei die Verlegeplatte (10) mehrere Schichten aufweist und die Rohrhalter (20) aus Draht mit seitlich abgebogenen Enden und einem dazwischenliegenden den Rohrprofilen angepassten Bereich bestehen, wobei die seitlich abgebogenen Enden der Rohrhalter (20) in die Verlegeplatte (10) durch Einsatz des Setzgerätes (40) eindringen, **dadurch gekennzeichnet, dass**
- die Verlegeplatte (10) als Strukturkammerplatte, bestehend aus drei fest miteinander verbundenen Funktionsschichten, ausgebildet ist, wobei die mittlere Schicht (12) eine Stützstruktur aufweist, die die stabile obere erste Deckschicht (11) und die untere zweite Deckschicht (13) voneinander beabstandet und zur Aufnahme der seitlich abgebogenen Enden mit Schwenkbögen (a, b) der Rohrhalter (20) ausgebildet ist;
- die seitlich abgebogenen Enden mit Schwenkbögen (a, b) der Rohrhalter (20) einen Krümmungsradius r aufweisen, der gleich oder kleiner der Höhe der Schichten (11) und (12) der Verlegeplatte (10) zuzüglich der Aufbauhöhe des Gegenhalters des Setzwerkzeuges (40) ist;
- das Setzwerkzeug (40) zur Aufnahme der Rohrhalter (20) mit seitlich abgebogenen Enden mit Schwenkbögen (a, b) und zum Einbringen derselben in die Verlegeplatte (10) ausgebildet ist.

2. Verlegesystem nach den Ansprüchen 1, **dadurch gekennzeichnet, dass**
- die obere erste Deckschicht (11) der Verlegeplatte (10) aus einer Folienbahn, einer Gittergewebefolie oder einem Metallgewebe, vorzugsweise aus Streckmetall, besteht;
- die mittlere Schicht (12) aus einer Stützstruktur aus einer Kunststofffolie, einer druckfesten Schaumstoffschicht oder einem Strukturklebstoff besteht, der einerseits die geforderten Druck- und Zugkräfte sicherstellt und andererseits das Eindringen der Rohrhalter erlaubt;
- die untere zweite Deckschicht (13) aus einer Folienbahn oder einer Holz- bzw. Hartfaserplatte oder einem anderen festen Werkstoff besteht.

3. Verlegesystem nach den Ansprüchen 1 und 2, **dadurch gekennzeichnet, dass** im Setzwerkzeug (40) ein System zur Speicherung von Energie vorgesehen ist, eingebracht in Form der über den Handgriff auf das Betätigungselement wirkenden Arbeit aus Betätigungskraft und Betätigungsweg, wobei das Betätigungselement mit einem im Gehäuse oberhalb des Schiebers integrierten Rückhaltesystem in einem funktionellen Zusammenhang steht, weiterhin eine über das Rückhaltesystem auf das Betätigungselement und den damit verbundenen Schieber wirkende Rückhaltekraft einstellbar ist und der Schieber bei Überwindung der Rückhaltekraft aktivierbar ist, wodurch ein annähernd gleicher Impuls erreichbar ist, der unabhängig vom Bediener ist.

4. Verlegesystem nach Anspruch 3, wobei das Rückhaltesystem mit einem Weg-gesteuerten Auslösemechanismus ausgestattet ist, der den Schieber bei einer definierten und beispielsweise in Abhängigkeit von der Festigkeit der Rohrhalter (20) einstellbaren Position des Betätigungselementes freigibt.

5. Verlegesystem nach wenigstens einem der o.g. Ansprüche, **dadurch gekennzeichnet, dass** zur Verbindung der Verlegeplatten (10) Plattenverbinder (30) vorgesehen sind, die wie die Rohrhalter (20) aus Draht bestehen und seitlich abgebogene Enden mit Schwenkbögen (a, b) aufweisen, wobei die seitlich abgebogenen Enden (a, b) der Plattenverbinder (30) einen Krümmungsradius r aufweisen, der gleich oder kleiner der Höhe der Schichten (11) und (12) der Verlegeplatte (10) zuzüglich der Aufbauhöhe des Gegenhalters des Setzwerkzeuges (40) ist.

6. Verlegesystem nach Anspruch 5, **dadurch gekennzeichnet, dass** die Verlegeplatte (10) als Strukturkammerplatte, bestehend aus drei fest miteinander verbundenen Funktionsschichten, ausgebildet ist, wobei die mittlere Schicht (12) eine Stützstruktur aufweist, die die stabile obere erste Deckschicht (11) und die untere zweite Deckschicht (13) voneinander beabstandet und zur Aufnahme der Schwenkbögen (a, b) der Plattenverbinder (30) ausgebildet ist.

7. Verlegesystem nach Anspruch 5 und 6 , **dadurch gekennzeichnet, dass** das Setzwerkzeug (40) zur Aufnahme der Plattenverbinder (30) mit seitlich abgebogenen Enden mit Schwenkbögen (a, b) und zum Einbringen derselben in die Verlegeplatten (10) ausgebildet ist.

## Claims

1. Installation system for surface heaters/coolers, comprising at least one installation plate (10), pipe retainers (20), and a setting tool (40) for inserting the pipe retainers (20), wherein the installation plate (10) has several layers and the pipe retainers (20) are made of wire having laterally bent ends and a region located in between which matches the pipe profiles, wherein the laterally bent ends of the pipe retainers (20) penetrate into the installation plate (10) using the setting device (40), **characterised in that**
- the installation plate (10) is designed as a structured chamber plate, comprising three functional layers rigidly connected to each other, wherein the centre layer (12) has a supporting structure, which spaces the stable upper first layer (11) and the lower second cover layer (13) from each other and which is designed to accommodate the pivoting bends (a, b) of the pipe retainers (20);
- the laterally bent ends with pivoting bends (a, b) of the pipe retainers (20) have a radius of curvature r which is less than or equal to the height of the layers (11) and (12) of the installation plate (10) plus the construction height of the counter holder of the setting tool (40);
- the setting tool (40) is designed to accommodate the pipe retainers (20) having laterally bent ends having pivoting bends (a, b) and to insert said pipe retainers into the installation plate (10).

2. Installation system according to claim 1, **characterised in that**
- the upper first cover layer (11) of the installation plate (10) consists of a film web, a lattice fabric film, or a metal fabric, preferably of expanded metal;
the centre layer (12) consists of a support structure made of a plastic film, a pressure-resistant foam material layer or a structure adhesive, which on the one hand ensures the required pressure and tensile forces, and, on the other, allows for the penetration of the pipe retainers;
the lower second cover layer (13) consists of a film web or a wood or hard-fibre plate or another solid material.

3. Installation system according to claims 1 and 2, **characterised in that** in the setting tool (40) a system is provided for the storing of energy, introduced in the form of the force taking effect from the actuation force and actuation path by way of the handle onto the actuation element, wherein the actuation element is in a functional connection with a retention system integrated above the slide element, and, in addition, a retention force taking effect by means of the retention system onto the actuation element, and onto the slide element connected to it, is adjustable, and the slide element can be activated at the overcoming of the retention force, as a result of which an approximately equal impulse can be achieved which is independent of the operator.

4. Installation system according to claim 3, wherein the retention system is equipped with a path-controlled trigger mechanism, which releases the slide element at a defined position of the actuation element, which is adjustable, for example, as a function of the strength of the pipe retainers (20).

5. Installation system according to at least one of the preceding claims, **characterised in that** plate connectors (30) are provided for the connection of the installation plates (10), which, like the pipe retainers (20) are made of wire and comprise pivoting bends (a, b), wherein the laterally bent ends (a, b) of the plate connectors (30) have a radius of curvature r that is less than or equal to the height of the layers (11) and (12) of the installation plate (10) plus the construction height of the counter holder of the setting tool (40).

6. Installation system according to claim 5, **characterised in that** in the installation plate (10) is designed as a structure chamber plate, consisting of three function layers securely connected to one another, wherein the middle layer (12) has a support structure which keeps the stable upper first cover layer (11) and the lower second cover layer (13) are spaced apart from one another and are configured such as to accommodate the pivoting bends (a, b) of the plate connectors (30).

7. Installation system according to claims 5 and 6, **characterised in that** in the setting tool (40) is designed to accommodate the plate connectors (30) with laterally bent ends with pivoting bends (a, b) and to insert them into the installation plate (10).

## Revendications

1. Système de pose pour des équipements de chauffage/refroidissement surfacique, comprenant au moins un panneau de pose (10), un support de tuyau (20) ainsi qu'un outil de mise en place (40) pour l'introduction des supports de tuyau (20), dans lequel le panneau de pose (10) présente plusieurs couches et les supports de tuyau (20) sont constitués de fil métallique pourvu d'extrémités pliées latéralement et d'une zone intercalée adaptée aux profils de tuyau, dans lequel les extrémités pliées latéralement des supports de tuyau (20) pénètrent dans le panneau de pose (10) par l'utilisation de l'appareil de mise en place (40), **caractérisé en ce que**
- le panneau de pose (10) est réalisé sous la forme d'un panneau cellulaire structuré constitué de trois couches fonctionnelles reliées les unes aux autres de manière solidaire, dans lequel la couche centrale (12) présente une structure d'appui, qui espace l'une de l'autre la première couche de recouvrement (11) supérieure stable et la deuxième couche de recouvrement (13) inférieure et qui est réalisée pour recevoir les extrémités pliées latéralement pourvues d'arcs de pivotement (a, b) des supports de tuyau (20) ;
- les extrémités pliées latéralement pourvues d'arcs de pivotement (a, b) des supports de tuyau (20) présentent un rayon de courbure r, qui est égal ou inférieur à la hauteur des couches (11) et (12) du panneau de pose (10) déduction faite de la hauteur de montage du contre-support de l'outil de mise en place (40) ;
- l'outil de mise en place (40) est réalisé pour recevoir les supports de tuyau (20) pourvus d'extrémités pliées latéralement comprenant des arcs de pivotement (a, b) et pour introduire ces derniers dans le panneau de pose (10).

2. Système de pose selon la revendication 1, **caractérisé en ce que**
- la première couche de recouvrement (11) supérieure du panneau de pose (10) est constituée d'une bande de film, d'un film en tissu à mailles ou d'un tissu en métal de préférence de métal déployé ;
- la couche centrale (12) est constituée d'une structure d'appui composée d'un film en plastique, d'une couche en mousse résistante à la pression ou d'un adhésif de structure, qui garantit d'une part les forces de pression et de traction requises et qui permet d'autre part l'introduction des supports de tuyau ;
- la deuxième couche de recouvrement (13) inférieure est constituée d'une bande de film ou d'un panneau en bois ou en fibres dures ou d'un autre matériau solide.

3. Système de pose selon les revendications 1 et 2, **caractérisé en ce qu'**est prévu, dans l'outil de pose (40), un système servant au stockage d'énergie, appliqué sous la forme de l'activité agissant par l'intermédiaire de la poignée sur l'élément d'actionnement, composé de la force d'actionnement et de la course d'actionnement, dans lequel l'élément d'actionnement se trouve dans une liaison fonctionnelle avec un système de retenue intégré dans le boîtier au-dessus du coulisseau, par ailleurs une force de retenue agissant par l'intermédiaire du système de retenue sur l'élément d'actionnement et le coulisseau relié à ce dernier peut être réglée et le coulisseau peut être activé lorsque la force de retenue est surmontée, ce qui permet d'atteindre une impulsion approximativement identique, qui ne dépend pas de l'utilisateur.

4. Système de pose selon la revendication 3, dans lequel le système de retenue est équipé d'un mécanisme de déclenchement à commande de course, qui libère le coulisseau dans le cas d'une position de l'élément d'actionnement définie et pouvant être réglée par exemple en fonction de la solidité des supports de tuyau (20).

5. Système de pose selon au moins l'une quelconque des revendications précédentes, **caractérisé en ce que** sont prévus afin de relier les panneaux de pose (10) des éléments de liaison de panneaux (30), qui sont constitués, comme les supports de tuyau (20), de fil métallique et qui présentent des extrémités pliées latéralement pourvues d'arcs de pivotement (a, b), dans lequel les extrémités (a, b) pliées latéralement des éléments de liaison de panneaux (30) présentent un rayon de courbure r, qui est égal ou inférieur à la hauteur des couches (11) et (12) du panneau de montage (10) déduction faite de la hauteur de montage du contre-support de l'outil de mise en place (40).

6. Système de pose selon la revendication 5, **caractérisé en ce que** le panneau de pose (10) est réalisé sous la forme d'un panneau cellulaire structuré constitué de trois couches fonctionnelles reliées les unes aux autres de manière solidaire, dans lequel la couche centrale (12) présente une structure d'appui, qui espace l'une de l'autre la première couche de recouvrement (11) supérieure stable et la deuxième couche de recouvrement (13) inférieure et qui est réalisée pour recevoir les arcs de pivotement (a, b) des éléments de liaison de panneaux (30).

7. Système de pose selon la revendication 5 et 6, **caractérisé en ce que** l'outil de pose (40) est réalisé pour recevoir les éléments de liaison de panneau (30) pourvus d'extrémités pliées latéralement comprenant des arcs de pivotement (a, b) et pour introduire ces derniers dans les panneaux de montage (10).
